# EUROPEAN PATENT APPLICATION

(11) **EP 3 276 765 A1**
(43) Date of publication of application: **31.01.2018**
(21) Application number: 16207520.4
(22) Date of filing: 30.12.2016
(51) Int. Cl.: H02H 5/04, H01R 13/66, H01R 13/713, H02H 3/02

(54) **POWER PLUG APPARATUS AND OVER TEMPERATURE PROTECTION METHOD THEREOF**

(30) Priority: 26.07.2016 TW 105123514
(71) Applicant: Delta Electronics, Inc., Taoyuan County 32063 (TW)
(72) Inventor: WANG, Ming-Whang, 32063 Taoyuan City (TW); WEN, Ping-Hung, 32063 Taoyuan City (TW)
(74) Representative: 2K Patentanwälte Blasberg Kewitz & Reichel

(57) **Abstract**

A power plug apparatus (10) includes a plug (102), a first temperature sensor (104) and a micro-control unit (108). The first temperature sensor (104) senses a temperature of the plug (102) and informs the micro-control unit (108) of the temperature of the plug (102). The micro-control unit (108) sends a control signal (112) to a load apparatus (30). According to the control signal (112), the load apparatus (30) receives a charging current (114).

## Description

### BACKGROUND OF THE INVENTION

### Field of the Invention

The present invention relates to a plug apparatus and a protection method thereof and especially relates to a power plug apparatus and over temperature protection method thereof.

### Description of the Related Art

The power plug apparatus is a very common apparatus. The power plug apparatus is used to connect the power socket and the load apparatus, so that the alternating current power can be transmitted from the power socket to the load apparatus to drive the load apparatus. Therefore, the power plug apparatus is very important.

The related art power plug apparatus has the over temperature protection function, so that when the temperature of the related art power plug apparatus is too high, the alternating current power can be disconnected (namely, turned off or cut off). However, the disadvantage of the related art power plug apparatus is that the communication of the over temperature protection function of the related art power plug apparatus and the load apparatus is not accurate.

### SUMMARY OF THE INVENTION

It is an object of the present invention to provide an enhanced power plug apparatus, for use (applied to) a power socket and a load apparatus, enabling a more accurate communication of the over temperature protection function of the power plug apparatus and the load apparatus. It is a further object of the present invention to provide a corresponding over temperature protection method, particularly for use in the power plug apparatus of the present invention.

These problems are solved by a power plug apparatus, for use (applied to) a power socket and a load apparatus, as claimed by claim 1, and by an over temperature protection method as claimed by claim 14. Further advantageous embodiments are the subject-matter of the dependent claims.

In order to achieve the object of the present invention mentioned above, the power plug apparatus of the present invention is for use (applied to) a power socket and a load apparatus. The power plug apparatus of the present invention comprises a plug, a first temperature sensor and a micro-control unit. Moreover, the plug is plugged and connected to the power socket. The first temperature sensor is arranged in the plug. The micro-control unit is electrically connected to the first temperature sensor and the load apparatus. The first temperature sensor senses a temperature and transmits to the micro-control unit, so that the micro-control unit sends a control signal to the load apparatus. According to the control signal, the load apparatus receives a charging current. Moreover, the micro-control unit determines whether the temperature is higher than a first temperature value and not higher than a second temperature value. If the temperature is higher than the first temperature value and not higher than the second temperature value, the control signal is a first signal value and the charging current is a first current value. Moreover, the micro-control unit determines whether the temperature is higher than the second temperature value. If the temperature is higher than the second temperature value, the control signal is a second signal value and the load apparatus stops receiving the charging current.

According to a further embodiment, the control signal is a duty cycle of a pulse width modulation. For example, the control signal is a pulse width modulation signal with the duty cycle.

According to a further embodiment, the first temperature value is between 70 degrees centigrade and 79 degrees centigrade, the second temperature value is between 81 degrees centigrade and 90 degrees centigrade, the first signal value is the duty cycle of the pulse width modulation greater than or equal to 8%, and less than 10%, and the second signal value is the duty cycle of the pulse width modulation less than 8%.

According to a further embodiment, the power plug apparatus further comprises a switch electrically connected to the plug and the load apparatus. When the control signal is the second signal value, the switch keeps turning on.

According to a further embodiment, the switch is a relay.

According to a further embodiment, the power plug apparatus further comprises a live wire and a neutral wire. The live wire is electrically connected to the plug, the switch, the load apparatus and the micro-control unit. The neutral wire is electrically connected to the plug, the switch, the load apparatus and the micro-control unit. Moreover, the switch comprises a live wire switch and a neutral wire switch. The live wire switch is electrically connected to the live wire and the micro-control unit. The neutral wire switch is electrically connected to the neutral wire and the micro-control unit.

According to a further embodiment, the power plug apparatus further comprises a ground wire, a ground monitoring circuit, a current detecting circuit, a residual current device and a second temperature sensor. The ground wire is electrically connected to the plug and the load apparatus. The ground monitoring circuit is electrically connected to the live wire, the neutral wire, the ground wire and the micro-control unit. The current detecting circuit is electrically connected to the live wire and the micro-control unit. The residual current device is electrically connected to the live wire, the neutral wire and the micro-control unit. The second temperature sensor is electrically connected to the micro-control unit.

According to a further embodiment, the power plug apparatus further comprises an auxiliary power circuit electrically connected to the live wire, the neutral wire and the micro-control unit.

According to a further embodiment, the power plug apparatus further comprises a voltage conversion circuit matching voltages of the micro-control unit and the load apparatus.

According to a further embodiment, the first temperature sensor is a thermistor.

According to a further embodiment, if the temperature is not higher than the first temperature value, the control signal is a normal signal value, so that the charging current is a normal current value.

According to a further embodiment, the normal signal value is greater than the first signal value. The first signal value is greater than the second signal value. The normal current value is greater than the first current value.

According to a further embodiment, the control signal is a voltage level. For example, the control signal is a voltage signal with the voltage level.

In order to achieve the other object of the present invention mentioned above, the over temperature protection method of the present invention comprises the following steps. (a) A temperature sensor senses a temperature of a plug and transmits to a micro-control unit. (b) The micro-control unit sends a control signal to a load apparatus. (c) According to the control signal, the load apparatus receives a charging current. (c1) If the temperature is not higher than a first temperature value, the micro-control unit adjusts the control signal as a normal signal value, so that the charging current is a normal current value. (c2) If the temperature is higher than the first temperature value and is not higher than a second temperature value, the micro-control unit adjusts the control signal as a first signal value, so that the charging current is a first current value. Moreover, the first current value is less than the normal current value. (c3) After step (c2), if the temperature is lower than a first hysteresis temperature, the control signal recovers as the normal signal value. Moreover, the first hysteresis temperature is lower than the first temperature value. (c4) If the temperature is higher than the second temperature value, the micro-control unit adjusts the control signal as a second signal value, so that the charging current is zero. Moreover, the second temperature value is higher than the first temperature value. (c5) After step (c4), if the temperature is lower than a second hysteresis temperature, the control signal recovers as the first signal value. Moreover, the second hysteresis temperature is lower than the second temperature value.

According to a further embodiment, the normal signal value is greater than the first signal value. The first signal value is greater than the second signal value.

An advantage of the present invention is that the communication of the over temperature protection function of the power plug apparatus and the load apparatus is more accurate.

### BRIEF DESCRIPTION OF DRAWING

Fig. 1 shows a block diagram of the first embodiment of the power plug apparatus of the present invention.
Fig. 2 shows a block diagram of the second embodiment of the power plug apparatus of the present invention.
Fig. 3 shows a block diagram of the third embodiment of the power plug apparatus of the present invention.
Fig. 4 shows a block diagram of the fourth embodiment of the power plug apparatus of the present invention.
Fig. 5 shows a diagram of the plug and the first temperature sensor of the present invention.
Fig. 6 shows a block diagram of the application embodiment of the power plug apparatus of the present invention.
Fig. 7 shows a flow chart of the over temperature protection method of the present invention.
Fig. 8 shows a diagram of the temperature versus the duty cycle of the pulse width modulation of the present invention.

### DETAILED DESCRIPTION OF THE INVENTION

Please refer to following detailed description and figures for the technical content of the present invention. The following detailed description and figures are referred for the present invention, but the present invention is not limited to it.

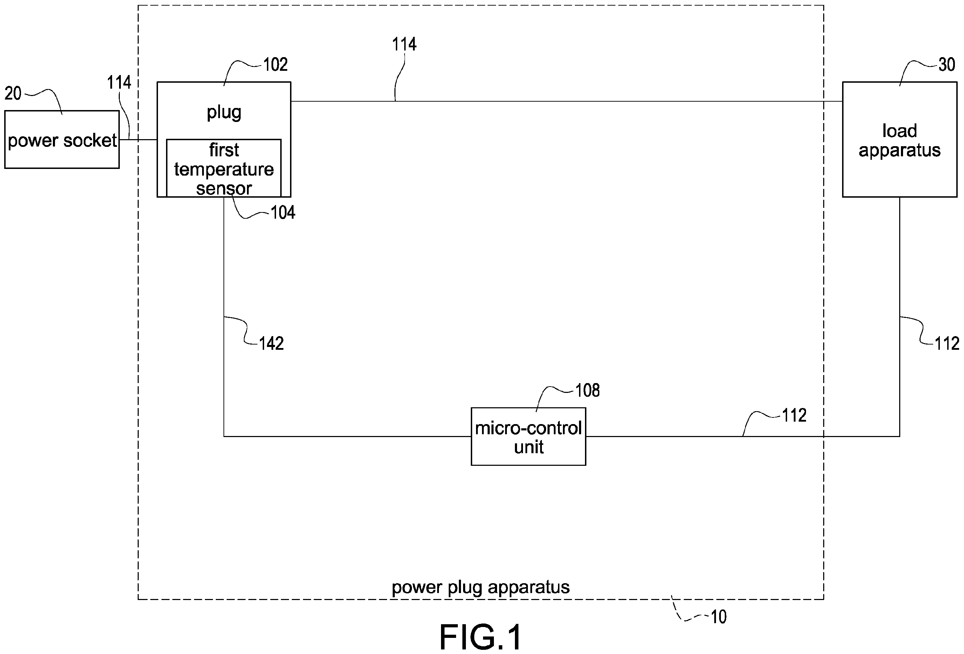

Fig. 1 shows a block diagram of the first embodiment of the power plug apparatus of the present invention. A power plug apparatus 10 is applied to a power socket 20 and a load apparatus 30. The power plug apparatus 10 comprises a plug 102, a first temperature sensor 104 and a micro-control unit 108.

The plug 102 is plugged and connected to the power socket 20, and is electrically connected to the load apparatus 30. The first temperature sensor 104 is arranged in the plug 102 to sense a temperature of the plug 102. The micro-control unit 108 is electrically connected to the first temperature sensor 104 and the load apparatus 30.

The first temperature sensor 104 senses the temperature of the plug 102 and informs the micro-control unit 108 of the temperature of the plug 102. In an embodiment of the present invention, the first temperature sensor 104 is, for example but not limited to, a negative temperature coefficient (NTC) thermistor. According to the temperature detected by the NTC thermistor, a voltage dividing value 142 is generated by the NTC thermistor and another resistor (not shown in Fig. 1), and then the voltage dividing value 142 is sent to the micro-control unit 108. When the micro-control unit 108 receives the voltage dividing value 142, the micro-control unit 108 sends the control signal 112 to the load apparatus 30.

According to the control signal 112, the load apparatus 30 receives a charging current 114 from the power socket 20 through the plug 102. In an embodiment of the present invention, the load apparatus 30 utilizes the constant current mode function to set the magnitude of the charging current 114 or to stop receiving the charging current 114. Moreover, the control signal 112 sent by the micro-control unit 108 can be a duty cycle of a pulse width modulation (For example, a pulse width modulation signal with the duty cycle). In other embodiments of the present invention, the micro-control unit 108 has an in-built digital-to-analog interface, so that the control signal 112 can be an analog voltage level (For example, an analog voltage signal with a voltage level).

The micro-control unit 108 determines whether the temperature of the plug 102 is not higher than a first temperature value (for example, the first temperature value can be set to be between 70 degrees centigrade and 79 degrees centigrade). If the temperature is not higher than the first temperature value, the control signal 112 sent by the micro-control unit 108 is a normal signal value, such as a normal duty cycle of the pulse width modulation (for example, greater than or equal to 10%, and less than or equal to 85%, such as 33.3%) or a normal voltage level, so that the charging current 114 is a normal current value (for example, 20 amperes).

For example, if the first temperature value is set as 77 degrees centigrade, when the temperature is not higher than 77 degrees centigrade, the control signal 112 sent by the micro-control unit 108 is the normal signal value (the duty cycle of the pulse width modulation is 33.3%). When the control signal 112 received by the load apparatus 30 is the normal signal value (the duty cycle of the pulse width modulation is 33.3%), the charging current 114 set and received by the load apparatus 30 is 20 amperes. Moreover, the load apparatus 30 can follow flowing equation to set the charging current 114: (the duty cycle of the pulse width modulation) * 0.6 * 100 = the charging current 114. Therefore, 33.3% * 0.6 * 100 ≒ 20.

The micro-control unit 108 further determines whether the temperature of the plug 102 is higher than the first temperature value and not higher than a second temperature value (for example, the second temperature value can be set to be between 81 degrees centigrade and 90 degrees centigrade). If the temperature is higher than the first temperature value and not higher than the second temperature value, the control signal 112 sent by the micro-control unit 108 is a first signal value, such as a first duty cycle of the pulse width modulation (for example, greater than or equal to 8%, and less than 10%, such as 9%) or a first voltage value, so that the charging current 114 is a first current value (for example, 6 amperes). Moreover, the first signal value is less than the normal signal value. For example, the first duty cycle of the pulse width modulation is less than the normal duty cycle (in other embodiments, the first voltage value is less than the normal voltage value). The first current value is less than the normal current value.

For example, if the second temperature value is defined as 85 degrees centigrade, when the temperature is higher than 77 degrees centigrade and not higher than 85 degrees centigrade, the duty cycle of the pulse width modulation of the control signal 112 sent by the micro-control unit 108 is 9% (or the first voltage value). When the duty cycle of the pulse width modulation of the control signal 112 received by the load apparatus 30 is 9%, the charging current 114 set and received by the load apparatus 30 is 6 amperes. Namely, when the temperature is slightly increasing, the charging current 114 is decreasing to decrease the temperature.

The micro-control unit 108 further determines whether the temperature of the plug 102 is higher than the second temperature value. If the temperature is higher than the second temperature value, the control signal 112 sent by the micro-control unit 108 is a second signal value. For example, the duty cycle of the pulse width modulation is a second duty cycle (less than 8%, such as 7.5%) or a second voltage level, so that the load apparatus 30 stops receiving the charging current 114. Moreover, the second signal value is less than the first signal value. For example, the second duty cycle of the pulse width modulation is less than the first duty cycle, or the second voltage value is less than the first voltage value.

For example, when the temperature is higher than 85 degrees centigrade, the duty cycle of the pulse width modulation of the control signal 112 controlled by the micro-control unit 108 is 7.5 %. When the duty cycle of the pulse width modulation of the control signal 112 received by the load apparatus 30 is 7.5 %, the load apparatus 30 stops receiving the charging current 114. Namely, when the temperature is too high, the load apparatus 30 will stop receiving the charging current 114 to decrease the temperature. In another word, the charging current 114 is set as zero at this time.

When the temperature is decreasing to be in a safe range (for example, not higher than 77 degrees centigrade or 85 degrees centigrade), the load apparatus 30 can receive the charging current 114 again. Moreover, in other embodiments, when the duty cycle of the pulse width modulation is greater than 85%, and less than or equal to 96%, the load apparatus 30 can follow flowing equation to set the charging current 114: (the duty cycle of the pulse width modulation - 64%) * 2.5 * 100 = the charging current 114. When the duty cycle of the pulse width modulation is greater than 96%, and less than or equal to 97%, the charging current 114 set and received by the load apparatus 30 is 80 amperes. When the duty cycle of the pulse width modulation is greater than 97%, the load apparatus 30 will stop receiving the charging current 114.

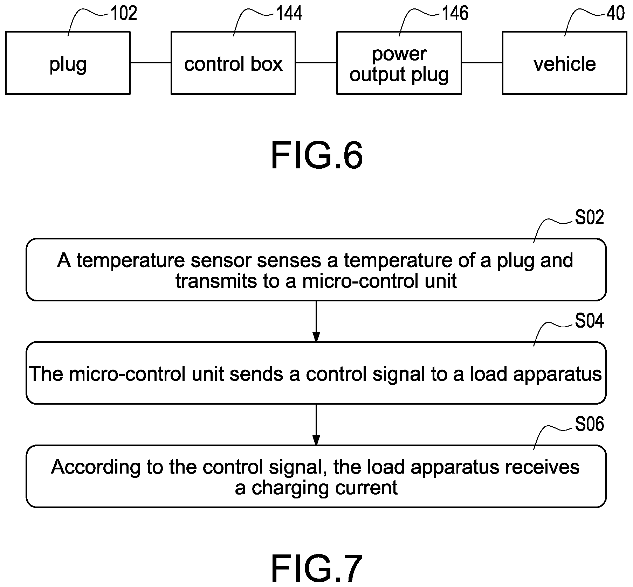

Moreover, the micro-control unit 108 at least comprises following functions:
1. The temperature of the plug 102 can be monitored accurately at all times by utilizing the analog-to-digital interface.
2. The temperature-controlling function equations and forms can be stored by utilizing the memory. According to the temperature, the load apparatus 30 adjusts the magnitude of the charging current 114 proportionally. The hysteresis functions can be utilized, so that the control signal 112 can avoid switching continually around the first temperature value (or around the second temperature value). Please refer to Fig. 7 below and the content thereof.
   For example, when the temperature is higher than the first temperature value and is not higher than the second temperature value so the charging current 114 decreases as the first current value (for example, 6 amperes) and thus the temperature is decreasing, the temperature has to be decreasing, for example, below 50 degrees centigrade (the first hysteresis temperature), so that the micro-control unit 108 just sends the normal signal value to the load apparatus 30. After the load apparatus 30 sets, the charging current 114 just recovers as the normal current value (for example, 20 amperes).
3. The equations can be modified and written into the micro-control unit 108, so that various temperature-controlling function equations and forms can be executed.

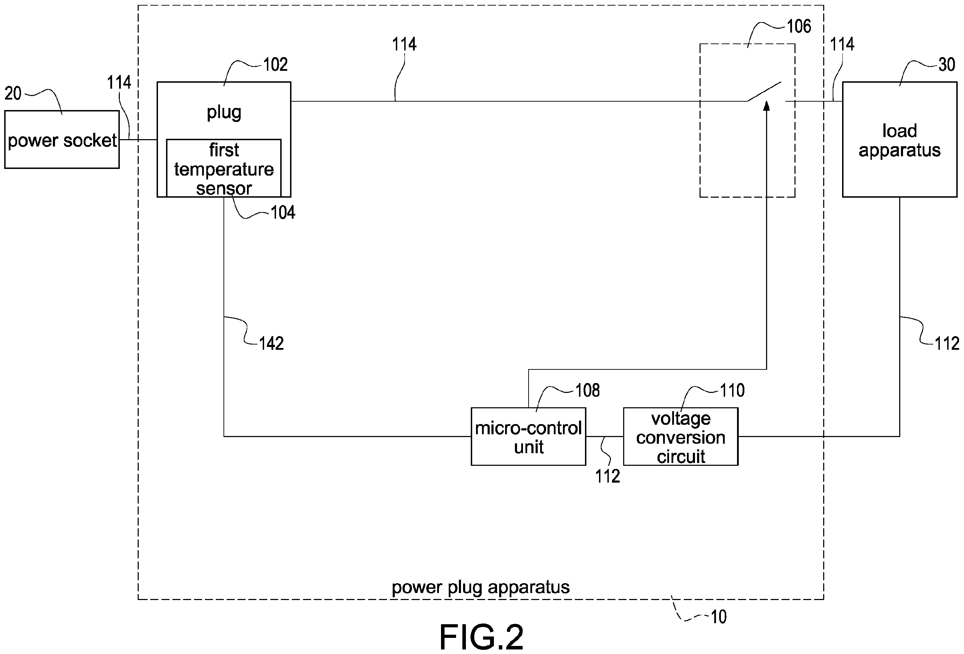

Fig. 2 shows a block diagram of the second embodiment of the power plug apparatus of the present invention. The description for the elements shown in Fig. 2, which are similar to those shown in Fig. 1, is not repeated here for brevity. The power plug apparatus 10 further comprises a voltage conversion circuit 110 and/or a switch 106. The switch 106 is electrically connected to the plug 102 and the load apparatus 30. The voltage conversion circuit 110 is electrically connected to the micro-control unit 108 and the load apparatus 30. The main function of the voltage conversion circuit 110 is that when the voltages of the micro-control unit 108 and the load apparatus 30 are different, the voltage conversion circuit 110 is used for matching the voltages to adjust the amplitude of the control signal 112. Moreover, the switch 106 can connect (namely, conduct or turn on) or disconnect (namely, cut off or turn off) the charging current 114. The switch 106 is, for example but not limited to, a relay switch circuit. In the embodiment with the switch 106, if the temperature is higher than the second temperature value, the control signal 112 sent by the micro-control unit 108 is the second signal value, for example, the second duty cycle of the pulse width modulation or the second voltage value, so that the load apparatus 30 stops receiving the charging current 114. At this time, the switch 106 keeps turning on (namely, conducting), so that when the temperature is decreasing to be in the safe range (for example, not higher than 77 degrees centigrade or 85 degrees centigrade), comparing to the related art that turns off the switch 106 for over temperature protection, the load apparatus 30 can receive the charging current 114 again more quickly and safely in the present invention.

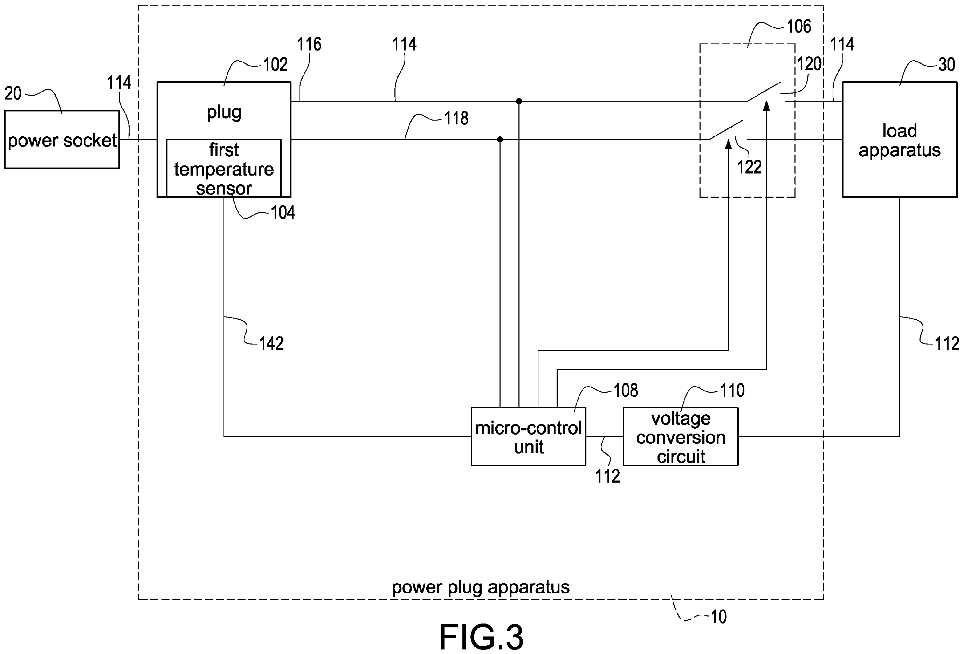

Fig. 3 shows a block diagram of the third embodiment of the power plug apparatus of the present invention. The description for the elements shown in Fig. 3, which are similar to those shown in Figs. 1∼2, is not repeated here for brevity. Moreover, the power plug apparatus 10 further comprises a live wire 116 and a neutral wire 118. The live wire 116 is electrically connected to the plug 102, the switch 106, the load apparatus 30 and the micro-control unit 108. The neutral wire 118 is electrically connected to the plug 102, the switch 106, the load apparatus 30 and the micro-control unit 108. The switch 106 comprises a live wire switch 120 and a neutral wire switch 122. The live wire switch 120 is electrically connected to the live wire 116 and the micro-control unit 108. The neutral wire switch 122 is electrically connected to the neutral wire 118 and the micro-control unit 108. The live wire switch 120 is, for example but not limited to, a relay switch. The neutral wire switch 122 is, for example but not limited to, a relay switch. In other embodiments, the present invention can be applied to the single phase three wires system, the three phases three wires system and three phases four wires system.

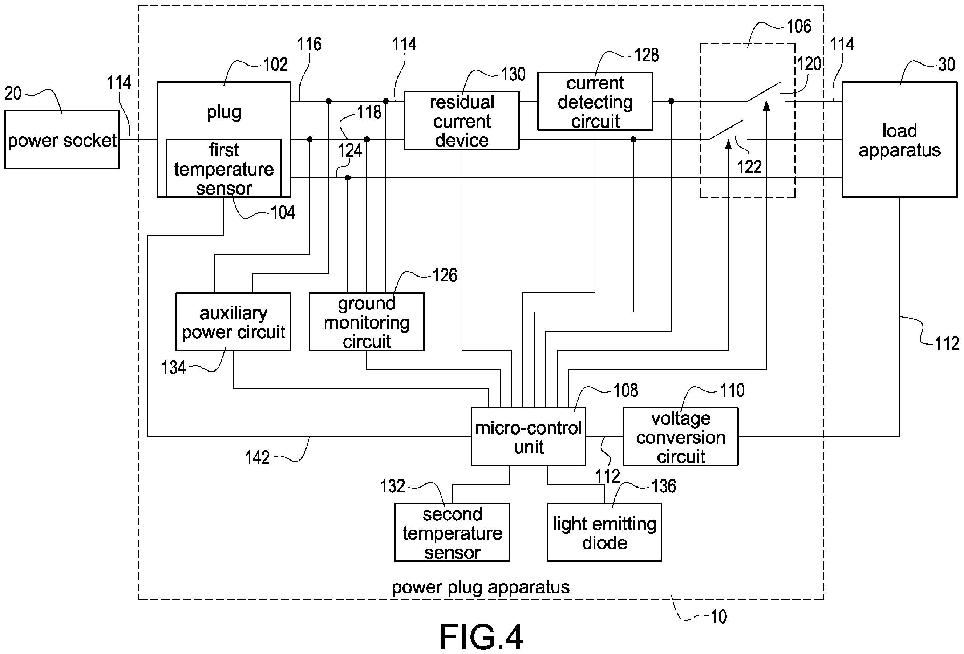

Fig. 4 shows a block diagram of the fourth embodiment of the power plug apparatus of the present invention. The description for the elements shown in Fig. 4, which are similar to those shown in Figs. 1∼3, is not repeated here for brevity. Moreover, the power plug apparatus 10 further comprises a ground wire 124, a ground monitoring circuit 126, a current detecting circuit 128, a residual current device 130, a second temperature sensor 132, an auxiliary power circuit 134 and a light emitting diode 136. The ground wire 124 is electrically connected to the plug 102 and the load apparatus 30. The ground monitoring circuit 126 is electrically connected to the live wire 116, the neutral wire 118, the ground wire 124 and the micro-control unit 108. The current detecting circuit 128 can be electrically connected to the live wire 116 (or the neutral wire 118) and the micro-control unit 108. The residual current device 130 is electrically connected to the live wire 116, the neutral wire 118 and the micro-control unit 108. The second temperature sensor 132 is electrically connected to the micro-control unit 108. The auxiliary power circuit 134 is electrically connected to the live wire 116, the neutral wire 118 and the micro-control unit 108. The light emitting diode 136 is electrically connected to the micro-control unit 108.

When the ground monitoring circuit 126, the current detecting circuit 128, the residual current device 130 or the second temperature sensor 132 detects/senses abnormal conditions, the micro-control unit 108 will be informed to turn off the live wire switch 120 and the neutral wire switch 122, so that the charging current 114 will not be sent to the load apparatus 30.

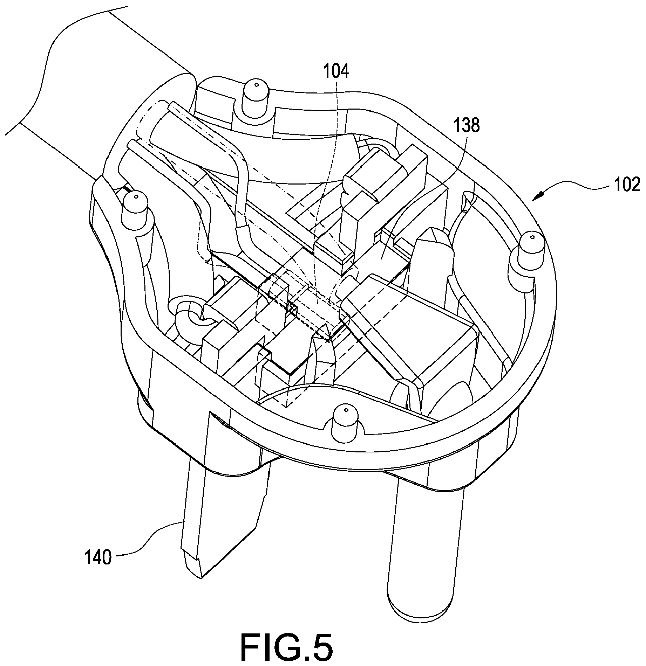

Fig. 5 shows a diagram of the plug and the first temperature sensor of the present invention.
The plug 102 comprises a heat conductor 138 and power pins 140. The heat conductor 138 touches the first temperature sensor 104 and the power pins 140, so that the thermal energy of the power pins 140 can be transmitted to the first temperature sensor 104 quickly. Namely, the temperature gradient of the first temperature sensor 104 and the power pins 140 is narrowed. A media (not shown in Fig. 5) can be arranged between the power pins 140 and the heat conductor 138 to fill gaps between the power pins 140 and the heat conductor 138, so that the heat conduction is better. The heat conductor 138 is an insulator, so that the heat conductor 138 can touch the power pins 140 directly.

Fig. 6 shows a block diagram of the application embodiment of the power plug apparatus of the present invention. In an embodiment of the present invention, the power plug apparatus is applied to charge the vehicle as shown in Fig. 6. A control box 144 may be independent in the mechanism to accommodate the micro-control unit 108 and the circuits mentioned above. One terminal of the control box 144 is electrically connected to the plug 102. The other terminal of the control box 144 is electrically connected to a power output plug 146 to connect to a vehicle 40. In other embodiments of the present invention, the present invention can be applied to medical facilities, especially portable (namely, mobile or movable) medical instruments. The power plug apparatus can be shown as Fig. 6, or the micro-control unit 108 and the circuits mentioned above are built in the medical instrument. The present invention is not limited to it.

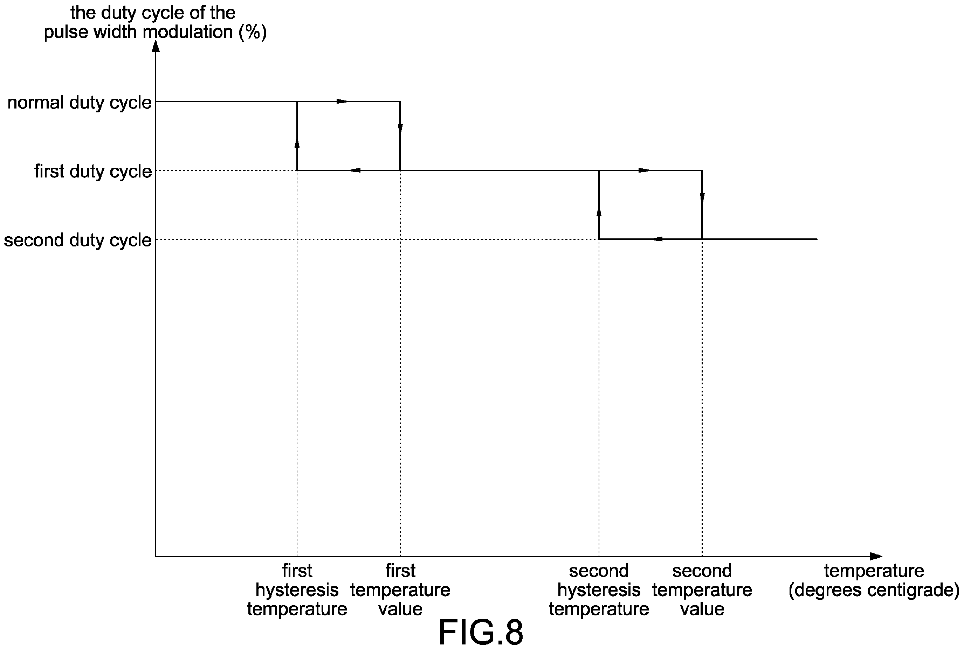

Fig. 7 shows a flow chart of the over temperature protection method of the present invention. Fig. 8 shows a diagram of the temperature versus the duty cycle of the pulse width modulation of the present invention. The over temperature protection method of the present invention comprises following steps:
S02: A temperature sensor senses a temperature of a plug and transmits to a micro-control unit.
S04: The micro-control unit sends a control signal to a load apparatus.
S06: According to the control signal, the load apparatus receives a charging current.

If the temperature is not higher than a first temperature value, the micro-control unit adjusts the control signal as a normal signal value (the duty cycle of the pulse width modulation is the normal duty cycle) and sends the control signal to the load apparatus, so that the charging current is a normal current value. If the temperature is higher than the first temperature value and is not higher than a second temperature value, the micro-control unit adjusts the control signal as a first signal value (the duty cycle of the pulse width modulation is the first duty cycle), so that the charging current is a first current value. Moreover, the first current value is less than the normal current value. Then, if the temperature is lower than a first hysteresis temperature, the control signal recovers as the normal signal value (the duty cycle of the pulse width modulation recovers as the normal duty cycle). Moreover, the first hysteresis temperature is lower than the first temperature value. If the temperature is higher than the second temperature value, the micro-control unit adjusts the control signal as a second signal value (the duty cycle of the pulse width modulation is the second duty cycle), so that the charging current is zero. Moreover, the second temperature value is higher than the first temperature value. Then, if the temperature is lower than a second hysteresis temperature, the control signal recovers as the first signal value (the duty cycle of the pulse width modulation recovers as the first duty cycle). Moreover, the second hysteresis temperature is lower than the second temperature value. Moreover, the normal signal value (the duty cycle of the pulse width modulation is the normal duty cycle) is greater than the first signal value (the duty cycle of the pulse width modulation is the first duty cycle). The first signal value (the duty cycle of the pulse width modulation is the first duty cycle) is greater than the second signal value (the duty cycle of the pulse width modulation is the second duty cycle).

The advantage of the present invention is to strengthen the over temperature protection function of the power plug apparatus, and the over temperature protection function is more accurate.

## Claims

1. A power plug apparatus (10) applied to a power socket (20) and a load apparatus (30), the power plug apparatus (10) comprising:
a plug (102) plugged and connected to the power socket (20);
a first temperature sensor (104) arranged in the plug (102); and
a micro-control unit (108) electrically connected to the first temperature sensor (104) and the load apparatus (30),
wherein the first temperature sensor (104) senses a temperature and transmits to the micro-control unit (108); the micro-control unit (108) sends a control signal (112) to the load apparatus (30); according to the control signal (112), the load apparatus (30) receives a charging current (114);
wherein the micro-control unit (108) determines whether the temperature is higher than a first temperature value and not higher than a second temperature value; if the temperature is higher than the first temperature value and not higher than the second temperature value, the control signal (112) is a first signal value and the charging current (114) is a first current value;
wherein the micro-control unit (108) determines whether the temperature is higher than the second temperature value; if the temperature is higher than the second temperature value, the control signal (112) is a second signal value and the load apparatus stops receiving the charging current (114).

2. The power plug apparatus (10) in claim 1, wherein the control signal (112) is a duty cycle of a pulse width modulation.

3. The power plug apparatus (10) in claim 2, wherein the first temperature value is between 70 degrees centigrade and 79 degrees centigrade; the second temperature value is between 81 degrees centigrade and 90 degrees centigrade; the first signal value is the duty cycle of the pulse width modulation greater than or equal to 8%, and less than 10%; the second signal value is the duty cycle of the pulse width modulation less than 8%.

4. The power plug apparatus (10) in claim 1 further comprising a switch (106) electrically connected to the plug (102) and the load apparatus (30), wherein when the control signal (112) is the second signal value, the switch (106) keeps turning on.

5. The power plug apparatus (10) in claim 4, wherein the switch (106) is a relay.

6. The power plug apparatus (10) in claim 4 further comprising:
a live wire (116) electrically connected to the plug (102), the switch (106), the load apparatus (30) and the micro-control unit (108); and
a neutral wire (118) electrically connected to the plug (102), the switch (106), the load apparatus (30), and the micro-control unit (108),
wherein the switch (106) comprises:
a live wire switch (120) electrically connected to the live wire (116) and the micro-control unit (108); and
a neutral wire switch (122) electrically connected to the neutral wire (118) and the micro-control unit (108).

7. The power plug apparatus (10) in claim 6 further comprising:
a ground wire (124) electrically connected to the plug (102) and the load apparatus (30);
a ground monitoring circuit (126) electrically connected to the live wire (116), the neutral wire (118), the ground wire (124) and the micro-control unit (108);
a current detecting circuit (128) electrically connected to the live wire (116) and the micro-control unit (108);
a residual current device (130) electrically connected to the live wire (116), the neutral wire (118) and the micro-control unit (108); and
a second temperature sensor (132) electrically connected to the micro-control unit (108).

8. The power plug apparatus (10) in claim 7 further comprising an auxiliary power circuit (134) electrically connected to the live wire (116), the neutral wire (118) and the micro-control unit (108).

9. The power plug apparatus (10) in claim 1 further comprising a voltage conversion circuit (110) matching voltages of the micro-control unit (108) and the load apparatus (30).

10. The power plug apparatus (10) in claim 1, wherein the first temperature sensor (104) is a thermistor.

11. The power plug apparatus (10) in claim 1, wherein if the temperature is not higher than the first temperature value, the control signal (112) is a normal signal value, so that the charging current (114) is a normal current value.

12. The power plug apparatus (10) in claim 11, wherein the normal signal value is greater than the first signal value; the first signal value is greater than the second signal value; the normal current value is greater than the first current value.

13. The power plug apparatus (10) in claim 1, wherein the control signal (112) is a voltage level.

14. An over temperature protection method comprising:
(a) a temperature sensor sensing a temperature of a plug (102) and transmitting to a micro-control unit (108);
(b) the micro-control unit (108) sending a control signal (112) to a load apparatus (30);
(c) according to the control signal, the load apparatus (30) receiving a charging current (114);
(c1) if the temperature is not higher than a first temperature value, the micro-control unit (108) adjusting the control signal (112) as a normal signal value, so that the charging current (114) is a normal current value;
(c2) if the temperature is higher than the first temperature value and is not higher than a second temperature value, the micro-control unit (108) adjusting the control signal (112) as a first signal value, so that the charging current (114) is a first current value, wherein the first current value is less than the normal current value;
(c3) after the step (c2), if the temperature is lower than a first hysteresis temperature, the control signal (112) recovering as the normal signal value, wherein the first hysteresis temperature is lower than the first temperature value;
(c4) if the temperature is higher than the second temperature value, the micro-control unit (108) adjusting the control signal (112) as a second signal value, so that the charging current (114) is zero, wherein the second temperature value is higher than the first temperature value; and
(c5) after the step (c4), if the temperature is lower than a second hysteresis temperature, the control signal (112) recovering as the first signal value, wherein the second hysteresis temperature is lower than the second temperature value.

15. The over temperature protection method in claim 14, wherein the normal signal value is greater than the first signal value; the first signal value is greater than the second signal value.
